# EUROPEAN PATENT APPLICATION

(11) **EP 2 412 775 A2**
(43) Date of publication of application: **01.02.2012**
(21) Application number: 10756297.7
(22) Date of filing: 10.03.2010
(51) Int. Cl.: C09J 9/02, B23K 35/00

(54) **SOLDER ADHESIVE AND A PRODUCTION METHOD FOR THE SAME, AND AN ELECTRONIC DEVICE COMPRISING THE SAME**

(30) Priority: 23.03.2009 KR 20090024627
(71) Applicant: Duksan Hi-Metal Co., Ltd., Buk-gu, Ulsan 683-804 (KR)
(72) Inventor: JANG, Yong Un, Ulju-gun Ulsan 689-805 (KR); KIM, Sung Chul, Suwon-si Gyeonggi-do 443-470 (KR); CHU, Yong Cheol, Ulsan 681-726 (KR); JANG, Seung Jun, Ulju-gun Ulsan 689-805 (KR); SON, Yoon Sang, Busan 604-754 (KR)
(74) Representative: Gesthuysen, von Rohr & Eggert
(86) International application number: PCT/KR2010/001490
(87) International publication number: WO 2010/110542

(57) **Abstract**

The present invention relates to a solder adhesive and a production method for the same, and to an electronic device comprising the same, and more specifically it relates to a solder adhesive comprising an alloy including tin and having a melting point of from 130 to 300°C, a first binder including a rosin compound, and a second binder having a thermosetting resin, as well as to a production method for the same and an electronic device comprising the same.

## Description

### TECHNICAL FIELD

The present invention relates to a solder adhesive, a method for manufacturing the same, and an electronic device including the same. More particularly, the present invention relates to a solder adhesive having enhanced electrical conductivity, adhesive force, and toughness.

### BACKGROUND ART

A reflow method is for soldering an electronic component to a printed circuit board. In the reflow method, soldering particles and a solder adhesive consisting of flux are coated on a part of the printed circuit board, the electronic component is mounted on the coated part, and the electronic component is adhered to the printed circuit board by melting the adhesive through a heater.

The solder adhesive needs enhanced electrical conductivity and adhesive force. Also, when the electronic component is usually used for a cellular phone, a high toughness is necessary for the solder adhesive so that the adhesive force can be maintained when an electronic device drops. However, the solder paste according to the prior art does not has a sufficient adhesive force and toughness. Particularly, the electrical conductivity, the adhesive force, and the toughness are largely varied depending on materials of the solder alloy and the flux used for the solder paste. Thus, the materials for the solder alloy and the flux are an important factor.

### DISCLOSURE

### TECHNICAL PROBLEM

The present invention is for providing a solder adhesive having enhanced electrical conductivity, adhesive force, and toughness and for providing an electronic device having the solder adhesive.

### TECHNICAL SOLUTION

In order to solve the technical problem, a solder adhesive according to the present invention may includes an alloy having a melting point of 130°C - 300°C and including tin, a first binder including a rosin compound, and a second binder including a thermosetting resin.

Here, the alloy may include tin, and at least one material selected from the group consisting ofAg, Cu, Bi, Zn, In, and Pb.

Also, the alloy may preferably include at least one material selected from the group consisting of a Sn-Ag-Cu-based alloy and a Sn-Bi-based alloy.

In addition, the alloy may preferably include at least one material selected from the group consisting of a Sn-3.0Ag-0,5Cu-based alloy, a Sn-3.9Ag-0,6Cu-based alloy, and a Sn-58Bi-based alloy.

Here, the first binder may include at least one material selected from the group consisting of gum rosin, rosin esters, polymerized rosin esters, hydrogenated rosin esters, disproportionated rosin esters, dibasic acid modified rosin esters, phenol modified rosin esters, a terpenephenolic copolymer resin, a maleic anhydride modified resin, and a hydrogenated acrylic modified resin.

Further, the second binder may include at least one material selected from the group consisting of an epoxy resin, phenolics, a melamine resin, a urea resin, a polyester or unsaturated polyester resin, silicon, polyurethane, a allyl resin, a thermosetting acrylic resin, a condensation polymerized resin of phenol-melamine, and a condensation polymerized resin of urea-melamine.

### ADVANTAGEOUS EFFECTS

According to a solder adhesive of the present invention, an alloy and a hybrid binder where a rosin compound and a synthetic resin are mixed are used. Thus, the solder adhesive can have enhanced electrical conductivity, adhesive force, and toughness.

In addition, the solder adhesive according to the present invention may be used as a solder paste, or be used together with the solder ball to act as a flux,

Further, in the case that the solder adhesive is used as the solder paste, the solder adhesive has a high adhesive force. In the case that the solder adhesive is used as the flux, the solder adhesive has a high electrical conductivity.

### BRIEF DESCRIPTION OF DRAWINGS

- FIG. 1: is a SEM photograph illustrating an adhesive poriton of a periphery of a solder ball formed by mixing a solder adhesive according to an embodiment of the present invention and a solder ball and soldering the same.
- FIG. 2: is a SEM photograph illustrating an intermetallic-compound layer formed by using a solder adhesive according to Comparative Ex- ample 1 and a solder ball.
- FIG. 3: is a SEM photograph illustrating an intermetallic-compound layer formed by using a solder adhesive according to Embodiment 1 and a solder ball.
- FIG. 4: is a SEM photograph illustrating an intermetallic-compound layer formed by using a solder adhesive according to Embodiment 2 and a solder ball.

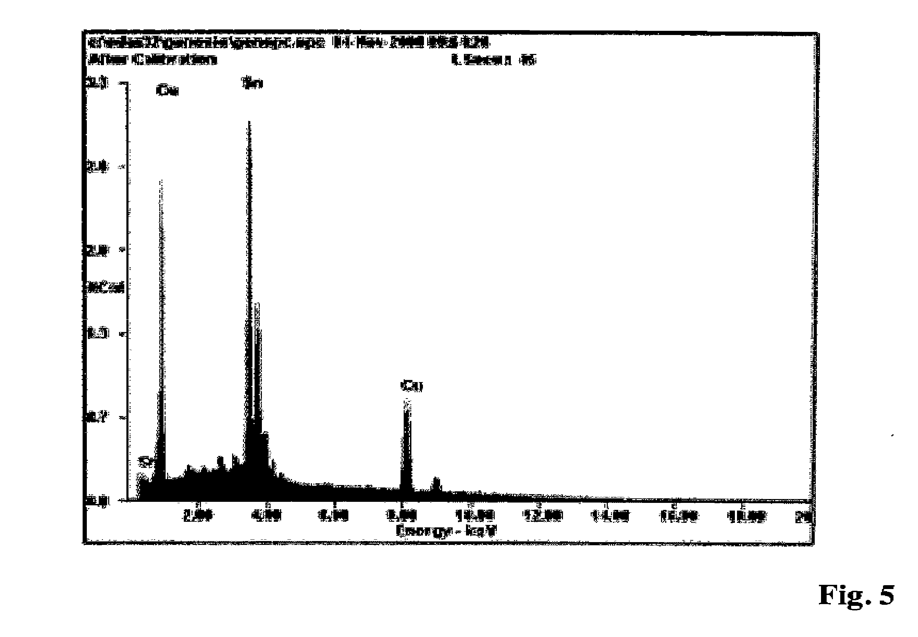

- FIG. 5: is an EDS result of the intermetallic-compound layer formed by us- ing the solder adhesive according to Comparative Example 1.
- FIG. 6: is an EDS result of the intermetallic-compound layer formed by us- ing the solder adhesive according to Embodiment 1.
- FIG. 7: is an EDS result of the intermetallic-compound layer formed by us- ing the solder adhesive according to Embodiment 2.
- Fig 8: is a graph illustrating a drop test by Weibull distribution.
- Fig. 9: is a flow chart illustrating a method for manufacturing a solder ad- hesive according to an embodiment of the present invention.

### DETAILED DESCRIPTION OF THE EMBODIMENTS

Hereinafter, a preferred embodiment of the present invention will be described in detail. The terms of "first" and "second" are used only for discriminate various constituent, and thus the present invention is not limited the above terms. The above terms are used only to distinguish one constituent from the other constituent. The terms of "comprises" and "include" of the present application are only for showing that a character, a step, or a combination thereof described in the specification exists. Thus, the terms of "comprise" and "include" do not exclude any existence or possibility of one or more other characters, steps, or combinations thereof. Unless there are different definitions, all terms used hereto (including technical terms and scientific terms) have the meanings same as those generally understood by the skilled in the art. A solder adhesive of the present invention includes both af Pb-free solders and Pb-based solders. Thus, the present invention is limited to the Pb-based solders.

### Solder Adhesive

A solder adhesive according to an embodiment of the present invention includes an alloy, a first binder including a rosin compound, and a second binder including a synthetic resin.

The alloy comprises tin, and at least one material selected from the group consisting of Ag, Cu, Bi, Zn, In, and Pb. As an example, at least one material selected from the group consisting of a Sn-Ag-based alloy, a Sn-Ag-Cu-based alloy, a Sn-Cu-based alloy, a Sn-Bi-based alloy, a Sn-Zn-based alloy, and a Sn-Pb-based alloy may be used for the alloy. That is, one or more two of a Sn-Ag-based alloy, a Sn-Ag-Cu-based alloy, a Sn-Cu-based alloy, a Sn-Bi-based alloy, a Sn-Zn-based alloy, and a Sn-Pb-based alloy may be used. In addition, Sn-3.0Ag-0.5Cu(SAC305),Sn95.5-Ag3.9-Cu0.6, Sn-3.9Ag-0.6Cu, Sn-25Ag-10Sb, Sn-0.7Cu,Sn-3.5Ag,Sn-2Ag,Sn-2.8Ag-20In, Sn-5Sb, Sn-58Bi, Sn-9Zn, Sn-0.5Ag-4Cu, Sn.2Ag.0,75Cu,Sn-3.2Ag-0.5Cn, Sn-3.8Ag-0.7Cu, Sn-4Ag-0.5Cu, Sn-4Ag-1Cu Sn-4.7Ag-1.7Cu, Sn-8Zn-3Bi, Sn-0.2Ag-2Cu-0.8Sb, Sn-2.5Ag-0.8Cu-0.5Sb(Castin), Sn-2Ag-7,5Bi, Sn-3.4Ag-4.8Bi, Sn-3.5Ag-3Bi, Sn-2Ag-3Bi-0,75Cu, Sn-3.5Ag-5Bi-0.7Cu, Sn-2Ag-4Bi-0.5Cu-0.1Ge, Sn-57Bi-0.1Ag, Sn-52In, Sn-2Ag, Sn-2.8Ag-20In, a Sn-Cu-based alloy, a Sn-Bi-based alloy, a Sn-Zn-based alloy, a Sn-Pb-based alloy, etc may be used. More preferably, Sn-3.0Ag-0.5Cu(SAC305), Sn95.5-Ag3.9-Cu0.6, or a Sn-Bi-based alloy may be used.

Here, the alloy may be preferably Sn-3.0Ag-0.5Cu. This is because this alloy has enhanced properties (such as wettability and mechanical properties), compared with the other Pb-free alloys.

The alloy may have a melting point of 130°C - 300°C, and more preferably, 175°C - 250°C. When the melting point is below 175°C, the hardness and the brittleness may increase, and the melting point and the gloss may decrease. When the melting point is above 250°C, the stress may be applied to the electronic device due to the high temperature. In the solder adhesive according to the embodiment of the present invention, the alloy may include a plurality of particles. That is, the powder-typed alloy may be used, The particle size may be 0.2µm - 50µm, and more preferably, 1µm - 15µm.

When the particle size is below 0.2µm, it may be difficult to apply to the electronic devices having fine pitches (gaps) and to manufacture the alloy particles. When the particle size is above 54µm, there may be a problem forming a bump at the electronic devices having fine pitches (gaps) because the power size is large.

Even though the each size of particles is slightly different, the size of the most particles can be defined as the particle size of the alloy. The alloy may have a sphere shape, or a shape of a needle and a flake shape. Even though the alloy generally has a sphere shape, the particle size is defined as an average of the longest and shortest segments of the line penetrating the particles when the particles do not have the complete sphere shape. Since the particles are almost spheres the particle size comes close to the diameter of a sphere.

The Rosin compound is used for the first binder of the embodiment of the present invention. As the rosin compound, at least one material selected from the group consisting of gum rosin, rosin esters, polymerized rosin esters, hydrogenated rosin esters, disproportionated rosin esters, dibasic acid modified rosin esters, phenol modified rosin esters, a terpenephenolic copolymer resin, a maleic anhydride modified resin, and a hydrogenated acrylic modified resin may be used.

Rosin is a natural resin formed by distilling pine resin and has resin acids. That is, rosin includes an abietic acid as a main material, and includes a neoabietic acid, a levopimaric acid 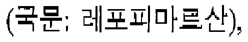 a hydroabietic acid, a pimaric acid, a dextrorotary, and so on. The resin acids reduce oxidized metals formed on the component surface to be adhered, and enhance the adhesive force and the toughness of the solder adhesive by increasing the wettability of the melted solder adhesive, thereby enhancing the electric property of the solder adhesive. In addition, the rosin compound protects the component surface after soldering, and thus, a life of the electronic device can be extended.

A thermosetting resin is used for the second binder. As the thermosetting resin, at least one material selected from the group consisting of an epoxy resin, phenolics, a melamine resin, a urea resin, a polyester or unsaturated polyester resin, silicone, polyurethane, an allyl resin, a thermosetting acrylic resin, a condensation polymerized resin of phenol-melamine, and a condensation polymerized resin of urea-melainine may be used. More preferably, a condensation polymerized resin of phenol-melamine or an epoxy resin may be used. The thermosetting resin has a high resistance to external impacts (heat, organic solvents, drop, anticorrosion, etc.) after heat curing, and thereby enhancing a function of the rosin compound of the first binder. Also, the thermosetting resin is immediately cured after a first soldering of the rosin compound, thereby increasing of the adhesive force and the toughness of the solder adhesive. Accordingly, the solder adhesive can stand the mechanical impacts applied from the outside, the high temperature, the organic solvents, the corrosion, and so on. That is, the solder adhesive has superior properties. The thermosetting resin contracts simultaneously with the soldering. As a result, the adhesive force and the toughness are increased.

On the other hand, a solvent, a hardening agent, an active agent, a corrosion inhibitor, a reducing agent, a thixotropic agent, a thickening agent, etc may be additionally used.

As the solvent, at least one material of glycidyl ethers, glycol ethers, and alpha-terpineol may be used.

As the hardening agent, a cycloaliphatic amine hardening agent (an epoxy hardening agent), an acid anhydride-based hardening agent, an amid hardening agent, an imidazole 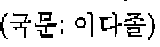 hardening agent, a latent hardening agent, and so on may be used. Particularly, as the latent hardening agent, dicyandiamide, 3-(3,4-dichlorophenyl)-1,1-dimethylurea, 2-phenyl-4-methyl-5-hydroxymethylimidazole, an amine adduct-based compound, an anhydride compound, an onium salt (a sulphonium salt, a phosphonium salt, and so on), an active ester of biphanylether block carboxylic acid 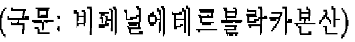 or polyvalent carboxylic acid may be used. The latent hardening agent is for accelerating the curing, and is added for reducing the curing temperature, thereby adjusting the curing velocity.

As the active agent, at least one material of a succinic acid, an adipic acid, a palmitic acid, a 3-boronfluoride ethyl amide complex, butylamine hydrobroimide, butylamine hydrochloride, ethylamine hydrobromide, pyzidinium hydrobromide, cyclohexylamine hydrobromide, ethylamine hydrochloride, 1,3-diphenyl guanidine hydrobromide, 2,2-bis(hydroxymethyl) propionic acid salt, and 2,3-dibromo-1-propanol may be used. The active agent supports the function of the abietic acid and activates the same. The abietic acid that is the main material of the rosin assists the alloy in melting and becoming a liquid. Also, the abietic acid eliminates (cleans) a oxidation film formed on a cupper plate of the substrate surface of the electronic device with almost no tolerance, and thus, the alloy can be properly adhered to the substrate surface of the electronic device.

As the corrosion inhibitor, at least one of an amine-based corrosion inhibitor and an ammonium-based corrosion inhibitor may be used. The corrosion inhibitor is slowly evaporated at the temperature of 100 °C or more when the moisture inside the flux, the moisture absorbed during the evaporation of the flux, the humidity of the air, and the humidity and the oxygen between the metal powders are discharged during the heat curing. Therefore, the corrosion inhibitor removes the humidity and the oxygen. In addition, the corrosion of the metal powder is prevented because a complex compound is formed outside of the metal powder.

As the reducing agent, a hydrazine-based reducing agent or an aldehyde-based reducing agent may be used. The reducing agent reduces the conductive metal when the conductive metal is oxidized, thereby preventing the electrical conductivity from decreasing. The hydrazine-based reducing agent includes hydrazine, hydrazine hydrate, hydrazine sulfate, hydrazine carbonate, and hydrazine hydrochloride. The aldehyde-based reducing agent includes formaldehyde, acetaldehyde, and propionaldehyde.

The thixotropic agent is for enhancing the printing property. The thixotropic agent improves wetting property, wettability, and thixotropy, thereby, enabling the adhesive being coated smoothly and being hardened quickly. As the thixotropic agent, at least one material selected from the group consisting af hydrogenated cast wax, polyamide wax, polyolefin wax, a dimer acid, a monomer acid, polyester modified polydimethyl siloxane, a polyaminamide carboxylic acid salt, carnauba wax, colloidal silica, and a bentonite-based clay may be used. The thickening agent is a material used for increasing viscosity, As the thickening agent, ethyl cellulose or hydropropyl cellulose may be used.

Here, the alloy may be preferably included from 70 to 90 parts by weight based on 100 parts by weight of the solder adhesive. When the alloy is included below 70 parts by weight, the printing property and the adhesive force are enhanced; however, the electrical property may deteriorate due to the increase of the resistance. When the alloy is included above 90 parts by weight, the electrical property is enhanced; however, the wettability at the soldering and the printing property may deteriorate.

The first binder (the rosin compound) may be preferably included from 1 to 29 parts by weight based on 100 parts by weight of the solder adhesive. When the first binder is included below 1 part by weight, the wettability at the soldering may be low, and thus, the electrical property may be decreased. When the first binder is included above 29 parts by weight, the adhesive force and the toughness may be decreased.

The second binder (the thermosetting resin) may be preferably included from 1 to 29 parts by weight based on 100 parts by weight of the solder adhesive, When the second binder is included below 1 part by weight, the adhesive force, the toughness, and the anticorrosion force may be decreased. When the second binder is included above 29 parts by weight, the electrical property may be low,

### Manufacturing Solder Adhesive and Property Evaluation

Next, with reference to the following Embodiments and Comparative Example, the solder adhesive of the present invention will be described in detail. However, the following Embodiments and Comparative Example do not limit the present invention.

### Embodiment 1 - Manufacturing of Solder Adhesive

52.5kg of a material having molecular weight more than 150 and a boiling point more than 200°C, among glycidyl ethers or glycol ethers, was used as a solvent. 36.20kg of phenol modified rosin ester as a first binder was stirred and dissolved under 100°C. 12.28kg of 3 or 4-methyl-1,2,3,6-tetrahydrophthalic anhydride as an acid anhydride-based hardening agent, 8.93kg of n-butylated melamine resin as a second binder, and 6.32kg of phenol-formaldehyde were stirred and dissolved at a temperature of more than 80°C, After that, 0.10keg of ethylamine hydrobromide, 0,17kg of butylamine hydrochloride, and 3.80kg of an adipic acid were heated, stirred, and dissolved at 100°C. 1.50kg of triethanolamine (TEA) as a stabilizing agent, 1.50keg of hydrogenated cast wax and 0.50kg of polyester modified polydimethyl siloxane as a thixotropic agent, and 1.20kg of ethyl cellulose as a thickening agent were added to adjust flowability and viscosity. Thus, a compound was manufactured.

880kg of Pb-free solder alloy powder SAC305 (Sn96.5%, Ag3.0%, Cu0.5%)(particle size of 2∼10µm) and the compound were added to a planetary mixer 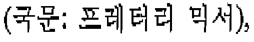 were mixed, were stirred, and were defoamed.

After that, it was dispersed at the 3-roll mill (roll gap of 10µm) to manufacture a solder adhesive.

### Embodiment 2 - Manufacturing of Solder Adhesive

52.68kg of a material having molecular weight more than 150 and a boiling point more than 200°C, among glycidyl ethers or glycol ethers, was used as a solvent. 38,39kg of a hydrogenated rosin as a first binder was stirred and dissolved under 100°C. 28.38kg of diglycidyl ether of bisphenol-A (epoxy equivalent weight (EEW) of 184-190 g/eq) as a second binder, 5.68kg of 3 or 4-methyl-1,2,3,6-tetrahydrophthalic anhydride as an acid anhydride-based hardening agent, and 1.15kg of 2,4,6-tris(dimethylaminomethyl)phenol (that is a tertiary amine-based hardening agent) as a hardening accelerator were stirred and dissolved under 100°C. After that, 0.15kg of ethylamine hydrobromide, 0.25kg of butylamine hydrochloride, and 3.12keg of an adipic acid were heated, stirred, and dissolved under 100°C. 2.5kg of triethanolamine (TEA) as a stabilizing agent was added, heated to 150°C, and stirred and dissolved. After that, 2.50kg af hydrogenated cast wax and 1.50kg of polyester modified polydimethyl siloxane as a thixotropic agent, and 1.20kg of ethyl cellulose as a thickening agent were added to adjust flowability and viscosity. Thus, a compound was manufactured. 870.00kg of SiBn58 (Sn42%,Bi58%) (particle size of 3~10µm) as a filler and the compound were added to a planetary mixer 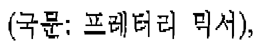 were mixed, were stirred, and were defoamed. After that, it was dispersed at the 3-roll mill (roll gap of 10µm) to manufacture a solder adhesive.

### Comparative Example 1 - Solder Adhesive of Prior Art

The solder adhesive sold in the market (Manufacturer: Senju, Product Name: M705-GRN360-K2-V) was used.

### Experimental Embodiment 1 - Evaluation Items of Solder Adhesive

After mixing each of the solder adhesives of Comparative Example 1, Embodiments 1 and 2 with a solder ball and soldering it, a soldering test, an adhesion checking test, a shear test, a test for checking a generation of an intermetallic compound (SEM/EDS), and a drop test were performed.

The soldering test was for evaluating workability. In the soldering test, a profile was measured by using an electron microscope (SMT Scope SK-5000) after reflowing the solder adhesive used for a flux.

The adhesion checking test was for evaluating the conductivity due to organic materials of the solder surface. In the adhesion checking test, the resistance was measured by using an ohmmeter.

The adhesive strength test was for evaluating the adhesive strength, and the adhesive strength was measured by using a shear apparatus (Shear-Pull tester Dage series 4000).

In the test for checking a generation of an intermetallic compound (hereinafter, referred to as "IMC checking test"), a scanning electron microscope (SEM) photograph was taken and an elementary analysis was performed by using an energy dispersive X-ray spectroscopy (EDS).

The drop test was for evaluating the impact strength of the solder to a dropping impact. The drop test was performed by using a drop tester (LAB SD-10) with the acceleration of 1500G under an international standard condition (JESD22-B111).

Table 1 shows the test items and the results thereof.

Referring to Table 1, the case using the solder adhesives of Embodiments 1 and 2 had superior properties in the soldering test, the adhesion checking test, the IMC checking test. Also, in the adhesive strength test, the case using the solder adhesives of Embodiments 1 and 2 had the similar adhesive strength with that of the case using the solder adhesive of Comparative Example 1. Particularly, in the IMC checking test, the case using the solder adhesives of Embodiments 1 and 2 had the property superior to that of the case using the solder adhesive of Comparative Example 1.

**Table 1**

| Item | Comparative Example 1 | Embodiment 1 | Embodiment 2 | Measuring Method | Apparatus |
|---|---|---|---|---|---|
| Soldering Test | Good | Good | Good | Checking reflow profile of solder adhesive | SMT Scope SK-5000 |
| Adhesion Checking Test | Good | Good | Good | Conductivity Evaluation | Mile ohm meter |
| Adhesive Strength Test(Shear Test) | 990g | 988g | 961g | BSSKG cartridge | Shear apparatus (Dage series4000) |
| IMC Checking Test | Good | Good | Good | Checking adhesive portion | SEM |
| Drop Test (drop test numbers when 1% initial failure is generated) | 13 | 23 | 47 | | Drop tester (LAB SD-10) |

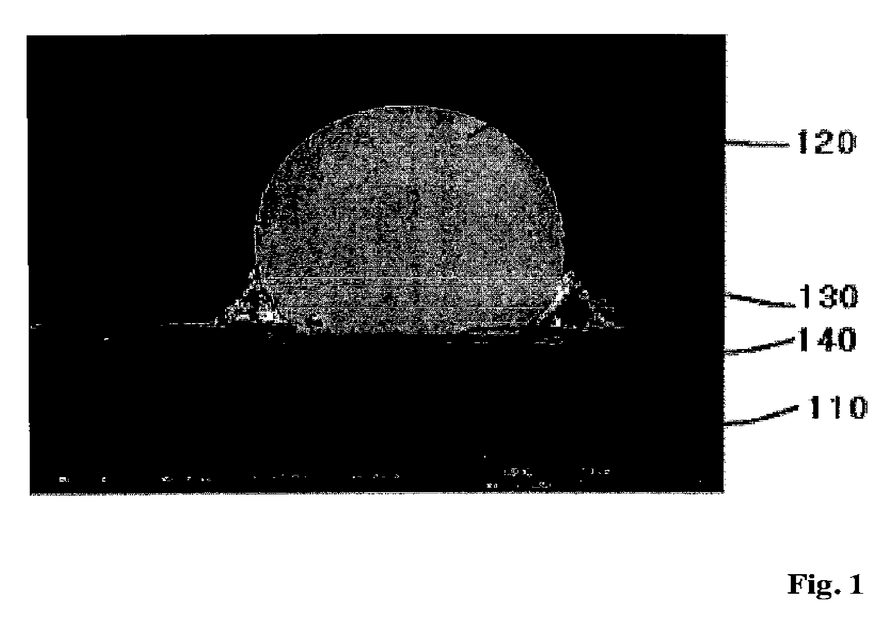

FIG. 1 is a SEM photograph illustrating an adhesive portion of a periphery of a solder ball formed by mixing a solder adhesive according to an embodiment of the present invention and a solder ball and soldering the same. In the case, the solder adhesive can act as a flux. On the other hand, referring to FIG. 1, a solder ball 120 is formed on a substrate 110, and an intermetallic-compound layer 140 is formed between the substrate 110 and the solder ball 120, Also, an adhesive portion 130 is formed a periphery of the solder ball 120, and surrounds a lower portion of the solder ball 120. The adhesive portion 130 includes the thermosetting resin that is the first binder, and preferably, may include at least one of a condensation polymerized resin of phenol-melamine and an epoxy resin. Since the adhesive portion 130 is formed on the substrate 100 and is formed to surround the periphery of the solder ball 120, the adhesive force and the toughness of the solder adhesive can be increased. In addition, a coating layer is formed on a surface of the solder ball 120 and at least a part of the substrate 110, The coating layer includes the rosin compound.

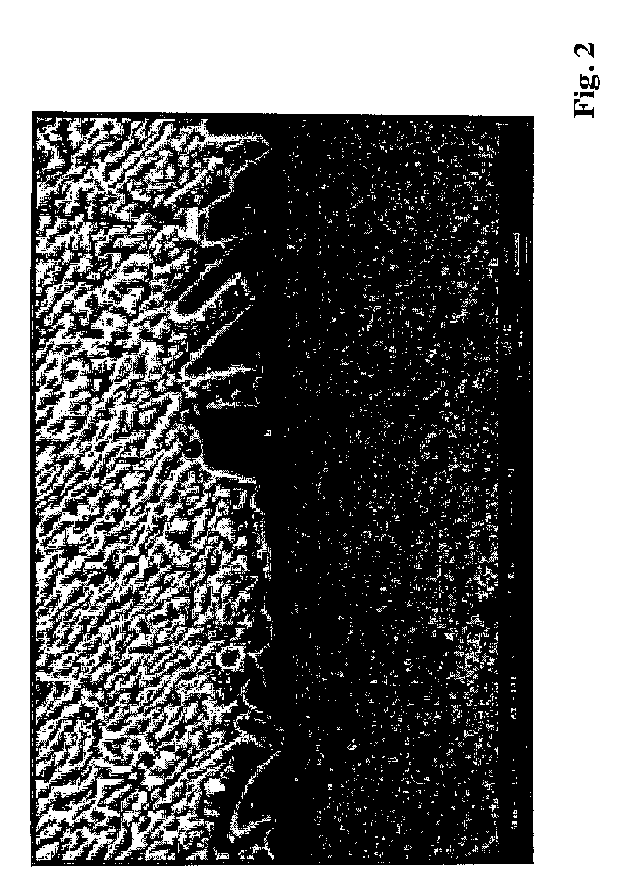

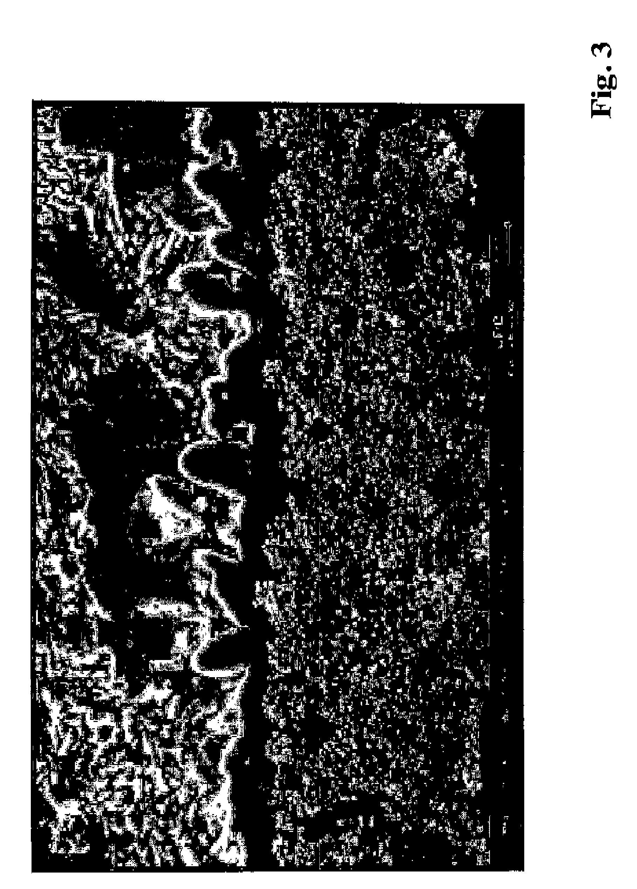

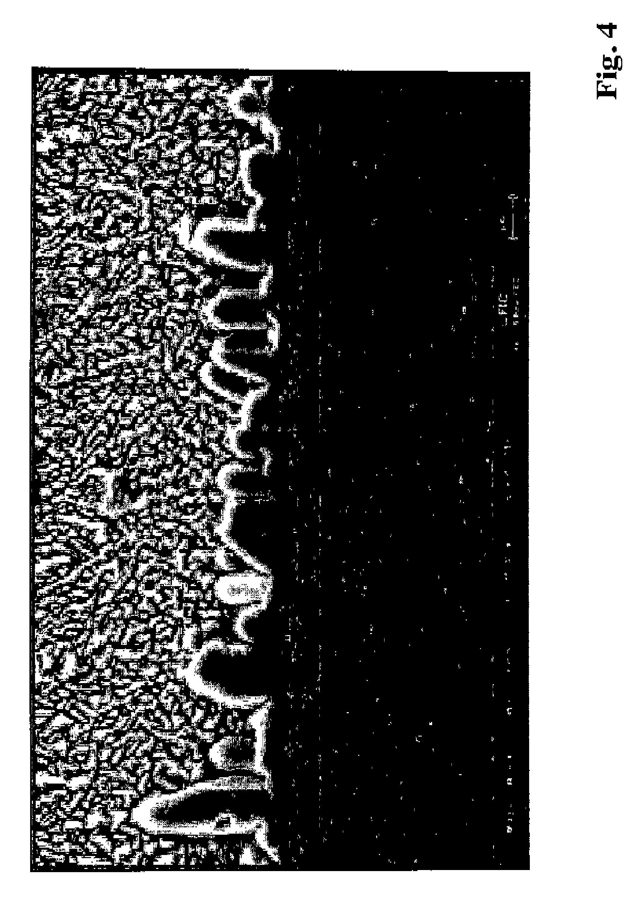

Meanwhile, FIG. 2 is a SEM photograph illustrating an intermetallic-compound layer formed by using a solder adhesive according to Comparative Example 1 and a solder ball. FIG. 3 is a SEM photograph illustrating an intermetallic-compound layer formed by using a solder adhesive according to Embodiment 1 and a solder ball, FIG. 4 is a SEM photograph illustrating an intermetallic-compound layer formed by using a solder adhesive according to Embodiment 2 and a solder ball.

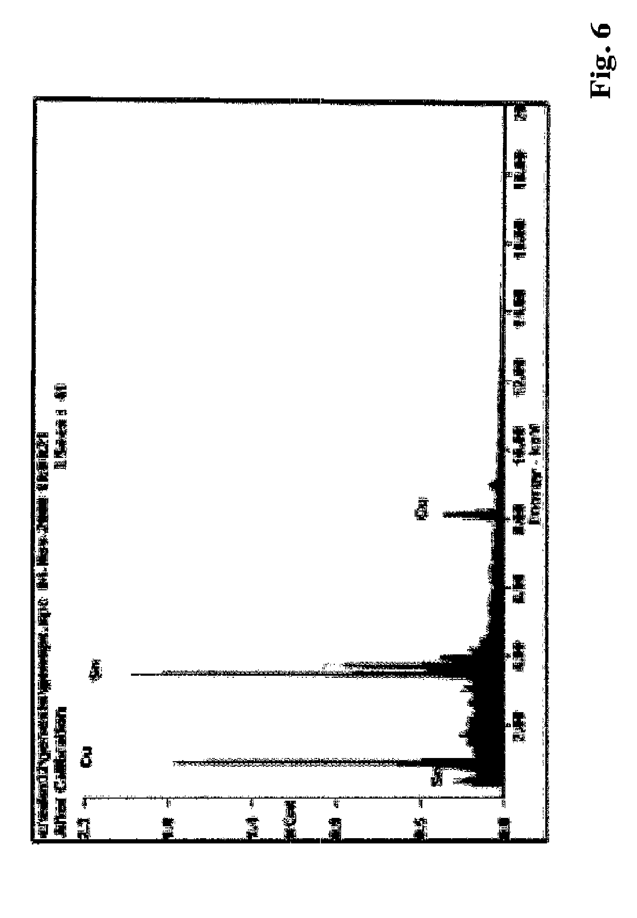

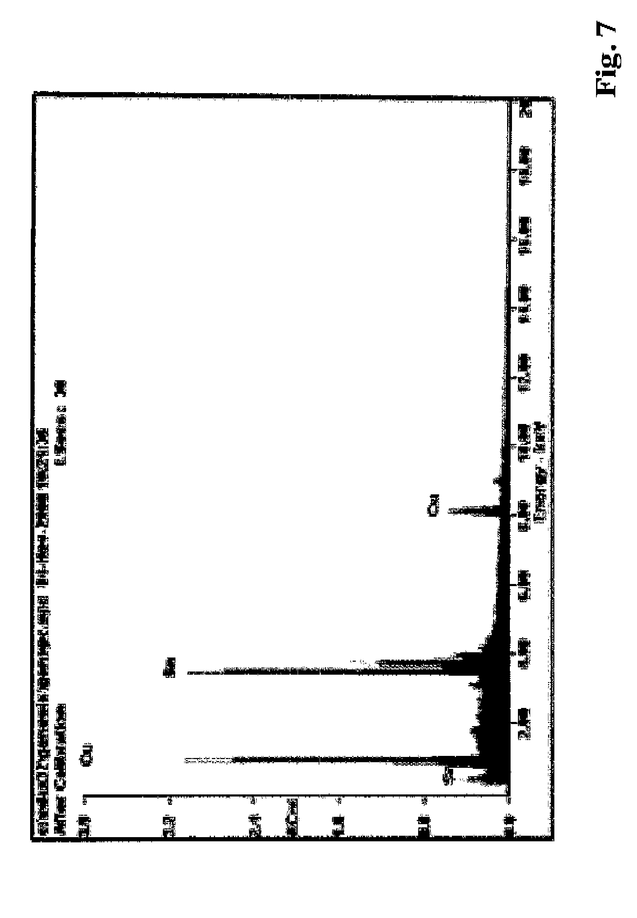

Also, FIG, 5 is an EDS result of the intermetallic-compound layer formed by using the solder adhesive according to Comparative Example 1. FIG. 6 is an EDS result of the intermetallic-compound layer formed by using the solder adhesive according to Embodiment 1. FIG, 7 is an EDS result of the intermetallic-compound layer formed by using the solder adhesive according to Embodiment 2. With reference to FIGs. 3 and 6, in the case using the solder adhesive of Embodiment 1, it can be seen that IMC(Cn₆Sn₅) was formed. Also, with reference to FIGs. 4 and 7, in the case using the solder adhesive of Embodiment 2, it can be seen that IMC (Cu₆Sn₅) was formed.

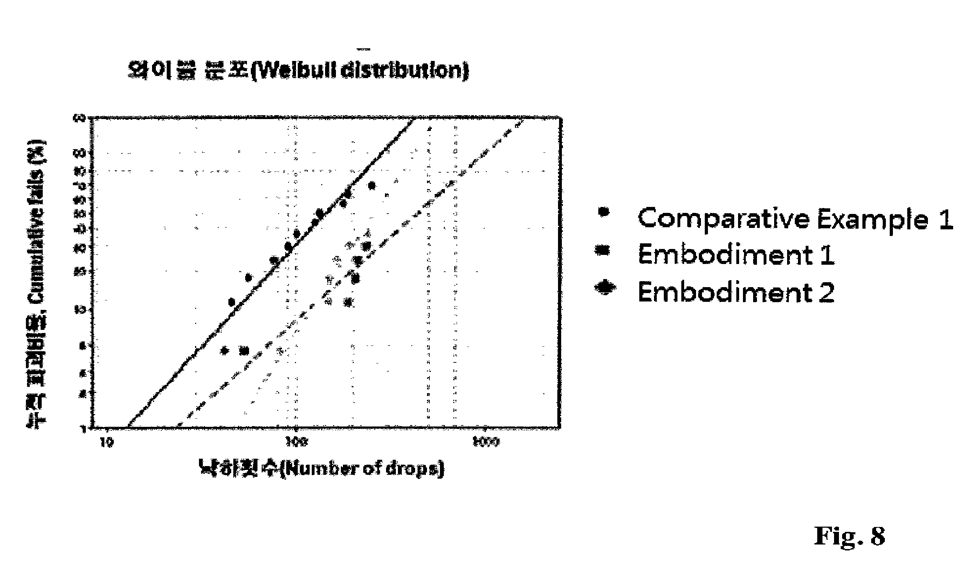

Further, Fig 8 is a graph illustrating a drop test by Weibull distribution. The Weibull distribution is a lifespan probability distribution for properly showing a probability density function of failure according to a failure rate. In Weibull distribution, a high slope of the graph and a large drop-test numbers when 1% failure is generated (hereinafter, referred to as "1% failure drop numbers") mean that the products has a high durability to the dropping impact and has a long lifespan. At the drop test of Embodiment 1, the result was deducted by dropping 60 chips 300 times. Referring FIG. 8, the 1% failure drop numbers were 13 times in the case using the solder adhesive of Comparative Example 1, the 1% failure drop numbers were 23 times in the case using the solder adhesive of Embodiment 1, and the 1% failure drop numbers were 47 times in the case using the solder adhesive of Embodiment 2, Thus, it can be seen that the cases using the solder adhesives of Embodiments 1 and 2 had the high durability to the dropping impact.

On the other hand, the solder adhesive of the embodiment according to the present invention may be used together with the solder, or be separately used. In the case that the solder adhesive of the embodiment according to the present invention is used together with the solder ball, the solder adhesive acts as the flux, and improves the electrical conductivity. In addition, in the case that the solder adhesive of the embodiment according to the present invention is separately used, the solder adhesive acts as the solder paste. In this case, the solder adhesive has a high adhesive force, as in the solder adhesives of above Experiment Embodiment.

### Method for Manufacturing Solder Adhesive

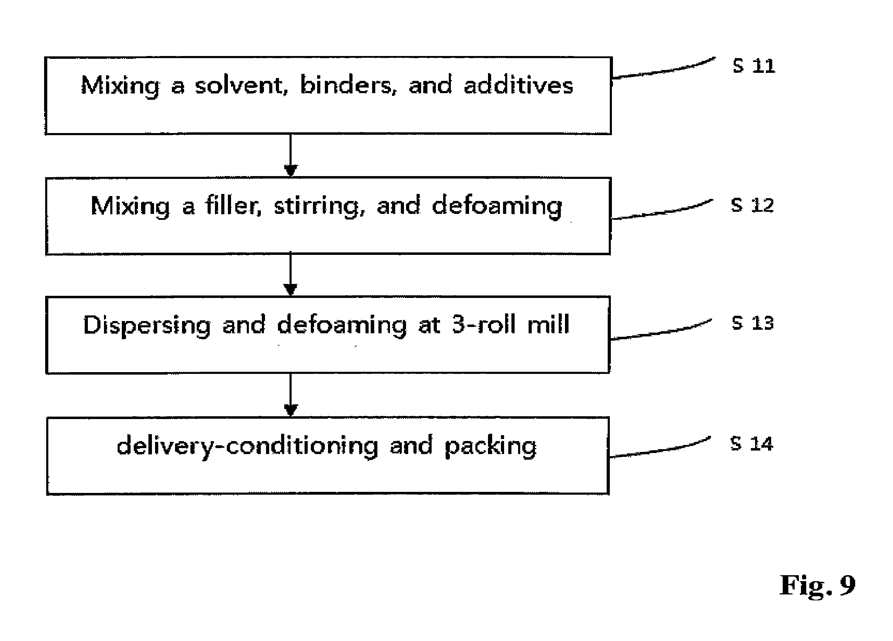

Hereinafter, a method for manufacturing a solder adhesive according to an embodiment of the present invention will be described in detail. Fig. 9 is a flow chart illustrating a method for manufacturing a solder adhesive according to an embodiment of the present invention. With reference to FIG. 9, the method for manufacturing the solder adhesive according to the embodiment of the present invention includes a step of mixing a solvent, binders, and additives (S11), a step of mixing a filler, stirring and defoaming (S12), and a step dispersing and defoaming the compound in a 3-roll mill (S13), and a step of delivery-conditioning and packing the manufactured solder adhesive (S14).

In the step of S11, while a thermosetting resin and a rosin compound are dissolved into a solvent, a modifier, a thixotropic agent, an active agent, a thickening agent, a hardening agent, and so on are added, thereby forming an organic compound. After that, the temperature is decreased to room temperature, and aging of the compound is performed. Particularly, since the thermosetting resin and the rosin compound has a low toughness, the adhesive surface may be broken, and thus, components may be short-circuited. Thus, it is preferable to modify the thermosetting resin and the rosin compound by adding at least one material of hydrogenated cast oil, siloxane-imide, liquid polybutadiene rubber, silica, and acrylate. In the step of S 12, the alloy as the filler is added and they were mixed and deformed at a planetary mixer 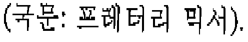 In the step of S13, the material mixed at the stirrer is dispersed in the 3-roll mill. Finally, in the step of S14, the performance of the manufactured solder adhesive is test, the delivery-conditioning is performed, and then the packing of the same is carried out.

In the method for manufacturing the solder adhesive according to the embodiment of the present invention, solder alloy powders having a melting point of 130°C - 300°C and a particle size of 0.2 - 50µm may be used as the filler. As the alloy powders, at least one material of Sn/Ag/Cu, SnBi, Sn/In, and Sn/Pb-based alloy may be used. Further, in the method for manufacturing the solder adhesive according to the embodiment of the present invention, Sn96.5 Ag3.0 Cu0.5-based alloy powders may be used.

In the method for manufacturing the solder adhesive according to the embodiment of the present invention, as the thermosetting resin, at least one material selected from the group consisting of a melamine resin, an epoxy resin, phenolics, a urea resin, a polyester or unsaturated polyester resin, silicone, polyurethane, a allyl resin, a thermosetting acrylic resin, a condensation polymerized resin of phenol-melamine, and a condensation polymerized resin of urea-melamine may be used. Also, as the rosin compound, at least one material selected from the group consisting of gum rosin, rosin esters, polymerized rosin esters, hydrogenated rosin esters, disproportionated rosin esters, dibasic acid modified rosin esters, phenol modified rosin esters, a terpenephenolic copolymer resin, a maleic anhydride modified resin, and a hydrogenated acrylic modified resin may be used.

If necessary, the method for manufacturing the solder adhesive according to the embodiment of the present invention may further include one or more steps adding a polyvalent alcohol-based solvent, a hardening agent, an active agent, a thixotropic agent, a thickening agent, and so on together or respectively.

Although embodiments have been described with reference to a number of illustrative embodiments thereof, it should be understood that numerous other modifications and embodiments can be devised by those skilled in the art that will fall within the spirit and scope of the principles of this disclosure. Thus, above emobiments do not limit the present invention, and they should be regarded as examples for explaining the present invention, Accordingly, the scope of the present invention is defined by the following claims, and various variations and modifications within the scope of the present invention defined by the appended claims are included in the present invention.

## Claims

1. A solder adhesive comprising:
an alloy having a melting point of 130°C - 300°C and comprising tin;
a first binder comprising a rosin compound; and
a second binder comprising a thermosetting resin.

2. The solder adhesive of claim 1, wherein the alloy comprises tin, and at least one material selected from the group consisting of Ag, Cu, Bi, Zn, In, and Pb.

3. The solder adhesive of claim 1, wherein the alloy comprises at least one material selected from the group consisting of a Sn-Ag-Cu-based alloy and a Sn-Bi-based alloy.

4. The solder adhesive of claim 1, wherein the alloy comprises at least one material selected from the group consisting of a Sn-3.0Ag-0.5Cu-based alloy, a Sn-3.9Ag-0.6Cu-bascd alloy, and a Sn-58Bi-based alloy.

5. The solder adhesive of claim 1, wherein the first binder comprises at least one material selected from the group consisting of gum rosin, rosin esters, polymerized rosin esters, hydrogenated rosin esters, disproportionated rosin esters, dibasic acid modified rosin esters, phenol modified rosin esters, a terpenephenolie copolymer resin, a maleic anhydride modified resin, and a hydrogenated acrylic modified resin.

6. The solder adhesive of claim 1, wherein the second binder comprises at least one material selected from the group consisting of an epoxy resin, phenolics, a melamine resin, a urea resin, a polyester or unsaturated polyester resin, silicone, polyurethane, an allyl resin, a thermosetting acrylic resin, a condensation polymerized resin of phenol-melamine, and a condensation polymerized resin of urea-melamine.

7. The solder adhesive of claim 1, wherein the alloy has the melting point of 175°C - 250°C.

8. A solder adhesive comprising:
an alloy having a melting point of 175°C - 250°C, and comprising at least one material selected from the group consisting of a Sn-3.0Ag-0.5Cu-based alloy, a Sn-3.9Ag-0.6Cu-based alloy, and a Sn-Pb-based alloy;
a first binder comprising a water-soluble rosin compound; and
a second binder comprising at least one of a condensation polymerized resin of phenol-melamine and an epoxy resin.

9. An electronic device comprising:
a substrate;
a solder ball formed on the substrate;
an intermetallic-compound layer formed between the substrate and the solder ball; and
an adhesive portion surrounding a periphery of the solder ball.

10. The electronic device of claim 9, wherein the adhesive portion is in contact with the substrate and the solder ball.

11. The electronic device of claim 9, further comprising a coating layer formed on a surface of the solder ball and at least a part of the substrate, and
wherein the coating layer comprises a rosin compound.

12. The electronic device of claim 9, wherein the alloy comprises tin, and at least one material selected from the group consisting of Ag, Cu, Bi, Zn, In, and Pb.

13. The electronic device of claim 9, wherein the solder ball comprises at least one material selected from the group consisting of a Sn-3.0Ag-0,5Cu-based alloy, a Sn-3.9Ag-0.6Cu-based alloy, and a Sn-Pb-based alloy.

14. The electronic device of claim 9, wherein the adhesive portion comprises a thermosetting resin.

15. The electronic device of claim 9, wherein the adhesive portion comprises at least one of a condensation polymerized resin of phenol-melamine and an epoxy resin.

16. The electronic device of claim 9, wherein at least a part of the intermetallic-compound layer is in contact with the solder ball, and the intermetallic-compound layer comprises copper and tin.

17. A method for manufacturing a solder adhesive, comprising:
a step of modifying a thermosetting resin and a rosin compound by adding at least one material selected from the group consisting of hydrogenated cast oil, siloxane-imide, liquid polybutadiene rubber, silica, and acrylate into the thermosetting resin and the rosin compound;
a step of forming a compound by mixing the thermosetting resin and the rosin compound with an alloy, wherein the alloy comprises Sn, and at least one material selected from the group consisting of Ag, Cu, Bi, Zn, In, and Pb; and
a step of dispersing the compound.

18. The method of claim 17, further comprising:
a step of dissolving the thermosetting resin and the rosin compound in a solvent and adding at least one of a thixotropic agent, an active agent, a thickening agent, and a hardening agent.

19. The method of claim 17, wherein the thixotropic agent comprises at least one material selected from the group consisting of hydrogenated cast wax, polyamide wax, polyolefin wax, a dimer acid, a monomer acid, polyester modified polydimethyl siloxane, a polyaminamide carboxylic acid salt, carnauba wax, colloidal silica, and a bentonite-based clay.

20. The method of claim 17, wherein the active agent comprises at least one material selected from the group consisting of a succinic acid, an adipic acid, a palmitic acid, a 3-boronfluoride ethyl amide complex, butylamine hydrobroimide, butylamine hydrochloride, ethylamine hydrobromide, pyridium hydrobromide, cyclohexylamine hydrobromide, ethylamine hydrochloride, 1,3-diphenyl guanidine hydrobromide, 2,2-bis(hydroxymethyl) propionic acid salt, and 2,3-dibromo-1-propanol.
